# EUROPÄISCHE PATENTSCHRIFT

(11) **EP 3 134 776 B1**
(45) Veröffentlichungstag und Bekanntmachung des Hinweises auf die Patenterteilung: **10.03.2021**
(21) Anmeldenummer: 15714778.6
(22) Anmeldetag: 26.03.2015
(51) Int. Cl.: G05B 15/02, H04L 12/28

(54) **VERFAHREN FÜR DIE INTERAKTION MIT VERNETZTEN HAUSGERÄTEN UND DAMIT VERBUNDENEN FUNKTIONEN UND DIENSTLEISTUNGEN, SOWIE ENTSPRECHENDES ELEKTRONISCHES GERÄT**
METHOD FOR INTERACTING WITH NETWORKED DOMESTIC APPLIANCES AND CORRESPONDING FUNCTIONS AND SERVICES, AND CORRESPONDING ELECTRONIC DEVICE
PROCÉDÉ D'INTERACTION AVEC DES APPAREILS MÉNAGERS CONNECTÉS EN RÉSEAU ET DES FONCTIONS ET SERVICES LIÉS À CEUX-CI, ET DISPOSITIF ÉLECTRONIQUE CORRESPONDANT

(30) Priorität: 24.04.2014 DE 102014207741
(43) Veröffentlichungstag der Anmeldung: 01.03.2017
(73) Patentinhaber: BSH Hausgeräte GmbH, 81739 München (DE)
(72) Erfinder: HÄPP, Claudia, 85591 Vaterstetten (DE); PIETSCH, Ingo, 81829 München (DE); WINDE, Mirco, 81667 München (DE)
(86) Internationale Anmeldenummer: PCT/EP2015/056615
(87) Internationale Veröffentlichungsnummer: WO 2015/161984

(56) Entgegenhaltungen:
- US-A1- 2001 038 392
- US-A1- 2012 001 723
- US-A1- 2012 065 749
- US-A1- 2012 259 859

## Beschreibung

Die Erfindung betrifft ein Verfahren und eine entsprechende Vorrichtung, durch die vernetzte Hausgeräte und damit in Zusammenhang stehende Funktionen und Dienstleistungen bedient und überwacht werden können.

Vernetzte Hausgeräte, die über eine App oder eine Web-basierte Anwendung bedient und überwacht werden können, sind bekannt. Die bisherigen Lösungen setzen dabei auf klassische Interaktionskonzepte bei denen Informationen bzgl. der Hausgeräte, sowie Informationen bzgl. der mit den Hausgeräten assoziierten Funktionen und Dienstleistungen nach Bereichen, Menüs und Untermenüs sortiert werden. Um von einem Menüpunkt aus einem Themenbereich zu einem anderen Menüpunkt aus einem anderen Themenbereich zu gelangen, ist dabei zunächst die Navigation durch die unterschiedlichen übergeordneten Menüstrukturen des entsprechenden Themenbereichs erforderlich, bevor im Zielbereich wiederum durch die entsprechenden Menüs und Untermenüs navigiert werden muss, um den entsprechenden Zielmenüpunkt zu erreichen. Alternativ können ausgewählte Funktionen oder Dienstleistungen durch ständig verfügbare Navigationselemente ("Shortcuts") einer schnellen Auswahl zugänglich gemacht werden. Dies kann aus Gründen des verfügbaren Platzes und der Übersichtlichkeit auf einer Seite der Anwendung jedoch nur für eine beschränkte Anzahl von Funktionen/Dienstleistungen realisiert werden.

Die US 2001/0038392 A1 beschreibt ein Verfahren und ein System zum Steuern unterschiedlicher Hausgeräte. Die US 2012/0001723 A1 beschäftigt sich mit einem Verfahren, bei dem mehrere Geräte auf einem Bildschirm dargestellt werden, um über diesen gesteuert zu werden.

Das vorliegende Dokument befasst sich mit der technischen Aufgabe eine vereinfachte und intuitive Benutzerinteraktion für die Bedienung von ein oder mehreren vernetzten Hausgeräten zu ermöglichen. Dabei soll es dem Nutzer ermöglicht werden, in einfacher Weise Zusammenhänge zwischen unterschiedlichen Bereichen und Aspekten der Bedienung der Hausgeräte zu erkennen.

Die Aufgabe wird durch die unabhängigen Ansprüche gelöst, die den Schutzumfang des vorliegenden Patents definieren. Vorteilhafte Ausführungsformen werden u.a. in den abhängigen Ansprüchen beschrieben.

Gemäß einem Aspekt wird ein Verfahren zur Bedienung mehrerer Hausgeräte mittels eines elektronischen Geräts beschrieben. Die Hausgeräte können z.B. einen Ofen, eine Spülmaschine, eine Waschmaschine, einen Trockner, etc. umfassen. Das elektronische Gerät kann ein Smartphone, ein Tablet PC, einen Laptop PC, etc. umfassen. Das elektronische Gerät ist mit den mehreren Hausgeräten über ein Kommunikations-Netzwerk (z.B. über ein drahtloses Netzwerk wie WLAN, UMTS, LTE) verbunden.

Das Verfahren umfasst das Bereitstellen eines Bedienprogramms für die mehreren Hausgeräte. Das Bedienprogramm umfasst eine Vielzahl von Seiten (z.B. eine Vielzahl von Webseiten). Die Seiten können über einen Web-Browser auf dem elektronischen Gerät dargestellt werden. Alternativ kann eine Software-Applikation (z.B. eine sogenannte App) auf dem elektronischen Gerät bereitgestellt werden, um die Seiten auf dem elektronischen Gerät auszugeben. Über die unterschiedlichen Seiten können unterschiedliche Themenbereich mit Bezug auf die mehreren Hausgeräte adressiert werden. Beispielhafte Themenbereich sind Themen, die ein Hausgerät und dessen Betrieb betreffen (z.B. Bedienung eines Hausgeräts, Status/Fehlerinformationen eines Hausgeräts), Themen, die die Verwendung eines Hausgeräts betreffen (z.B. Rezepte zum Kochen oder Backen), und/oder Themen, die Dienstleistungen in Bezug auf ein Hausgerät betreffen (z.B. eine Service-Hotline, ein Wartungsdienst, ein Benutzerforum, die Beschaffung von Ersatzteilen).

Die Vielzahl von Seiten ist hierarchisch in einer Menüstruktur bzw. Baumstruktur angeordnet. Insbesondere kann die Vielzahl von Seiten gemäß der vordefinierten Vielzahl von Themenbereichen angeordnet sein. Ein derartiger Aufbau der Seiten des Bedienprogramms kann dazu führen, dass ausgehend von einer ersten Seite (z.B. in einem ersten Themenbereich) eine ggf. relevante zweite Seite (z.B. in einem zweiten Themenbereich, der von dem ersten Themenbereich unterschiedlich ist) nicht oder nur in sehr aufwändiger Weise von einem Nutzer des Bedienprogramms aufgefunden und aufgerufen werden kann.

Das Verfahren umfasst das Ausgeben einer ersten Seite der Vielzahl von Seiten anhand eines Ausgabemittels des elektronischen Geräts, das einen Bildschirm umfasst. Die erste Seite wird als ein Teil einer bildlichen Darstellung (z.B. auf dem Bildschirm des elektronischen Geräts) ausgegeben.

Das Verfahren umfasst weiter das Ermitteln eines Kontextes auf Basis der ausgegebenen ersten Seite. Dazu werden Informationen, die auf der ersten Seite dargestellt sind, analysiert. Diese Informationen umfassen ein oder mehrere von: eine Überschrift der ersten Seite; eine Fehlermeldung und/oder Statusmeldung bzgl. eines Hausgeräts, die auf der ersten Seite dargestellt ist; ein auf der ersten Seite dargestellter Textblock; ein oder mehrere dargestellte Bedienelemente zur Steuerung eines Hausgeräts; und/oder ein Hintergrundbild der ersten Seite.

Das Verfahren umfasst weiter das Bestimmen einer zweiten Seite der Vielzahl von Seiten in Abhängigkeit von dem ermittelten Kontext. Mit anderen Worten, es können ein oder mehrere Seiten des Bedienprogramms ermittelt werden, die mit dem Kontext der ersten Seite assoziiert sind oder für den Kontext der ersten Seite relevant sind. Dafür können insbesondere ein oder mehrere Schlagwörter auf Basis des ermittelten Kontextes ermittelt werden. Die zweite Seite kann dann anhand der ein oder mehreren Schlagwörter bestimmt werden (z.B. unter Verwendung eines inversen Suchindexes für die Vielzahl von Seiten). Alternativ oder ergänzend können bei der Bestimmung der zweiten Seite ein oder mehrere vordefinierte Regeln verwendet werden. Eine vordefinierte Regel kann dabei Expertenwissen bzgl. der Relevanz von einer Seite in Bezug auf einen bestimmten Kontext wiedergeben.

Zur Bestimmung der zweiten Seite werden mehrere Kandidatenseiten aus der Vielzahl von Seiten in Abhängigkeit von dem ermittelten Kontext ermittelt. Desweiteren wird eine Relevanz (z.B. ein Relevanzmaß) von jeder der mehreren Kandidatenseiten für den ermittelten Kontext bestimmt. Die zweite Seite wird dann in Abhängigkeit von der Relevanz aus den Kandidatenseiten ausgewählt. Insbesondere kann die zweite Seite als die Kandidatenseite mit der höchsten Relevanz für den ermittelten Kontext ausgewählt werden. So kann sichergestellt werden, dass der Mehrwert durch die Ermittlung einer zweiten Seite für den Nutzer des Bedienprogramms weiter erhöht wird.

Das Verfahren umfasst weiter das Ermitteln eines Interaktionselements (in diesem Dokument auch als "Toast" bezeichnet). Das Interaktionselement kann dabei eine Verknüpfung zu der zweiten Seite umfasst. Das Interaktionselement wird dann anhand des Ausgabemittels in Zusammenhang mit der ausgegebenen ersten Seite (z.B. als ein weiterer Teil der bildlichen Darstellung) ausgegeben. Durch das Interaktionselement kann ein Nutzer auf eine weitere (zweite) Seite des Bedienprogramms hingewiesen werden, die für den aktuellen Kontext relevant ist. Der Nutzer kann somit auch ohne Kenntnis der Menüstruktur des Bedienprogramms in effizienter Weise auf andere relevante Seiten des Bedienprogramms zugreifen (z.B. durch Anklicken des Interaktionselements und der damit verbundenen Aktivierung der Verknüpfung). So kann die Bedienung der mehreren Hausgeräte vereinfacht und verbessert werden.

Durch die Verknüpfung mit der zweiten Seite kann das Interaktionselement dazu verwendet werden (z.B. durch Anklicken), die zweite Seite des Bedienprogramms zu aktivieren. Die zweite Seite des Bedienprogramms kann dann an die Stelle der ersten Seite in der bildlichen Darstellung treten. Für die zweite Seite können dann wiederum ein Kontext und basierend darauf ein oder mehrere Interaktionselemente für weitere Seiten ermittelt und angezeigt werden. So können für jede der Vielzahl von Seiten kontextabhängige Interaktionselemente mit Verknüpfungen zu anderen Seiten des Bedienprogramms ausgegeben werden.

Die erste Seite wird in einem Basisbereich der bildlichen Darstellung ausgegeben und das Interaktionselement wird in einem kontextabhängigen Bereich der bildlichen Darstellung ausgegeben. Dabei können der Basisbereich und der kontextabhängige Bereich für die Darstellung von unterschiedlichen Seiten der Vielzahl von Seiten örtlich fixiert sein. Mit anderen Worten, für den Basisbereich und den kontextabhängigen Bereich können bestimmte Bereiche der bildlichen Darstellung reserviert sein. Dies ermöglicht es einem Nutzer, in einfacher Weise die eigentliche Seite des Bedienprogramms (d.h. die erste Seite) von dem kontextabhängigen Verweis auf mglw. relevante andere Seiten (d.h. von dem Interaktionselement) zu unterscheiden.

Der Basisbereich und der kontextabhängige Bereich können gleichzeitig in der bildlichen Darstellung ausgegeben werden. Insbesondere können der Basisbereich und der kontextabhängige Bereich nebeneinander in der bildlichen Darstellung ausgegeben werden. Eine gleichzeitige vollständige Darstellung des Basisbereichs und des kontextabhängigen Bereichs ist z.B. möglich, wenn das elektronische Gerät einen ausreichend großen Bildschirm umfasst. Alternativ oder ergänzend kann in Reaktion auf eine Eingabe auf dem elektronischen Gerät (z.B. in Reaktion auf eine Wischbewegung auf einem berührempflindlichen Bildschirm) der kontextabhängige Bereich aus der bildlichen Darstellung entfernt werden (und ggf. wieder durch eine weitere Eingabe in die bildliche Darstellung aufgenommen werden). Die kann insbesondere für elektronische Geräte mit einem relativ kleinen Bildschirm von Vorteil sein, um die Ausgabe der ersten Seite im Basisbereich nicht zu beeinträchtigen.

Der kontextabhängige Bereich (in diesem Dokument auch als Toastpanel oder Toastbereich bezeichnet) umfasst einen Bereich, in dem eine Vielzahl von Interaktionselementen dargestellt werden kann. Desweiteren kann das Verfahren das Bestimmen mehrerer Seiten (z.B. drei Seiten) der Vielzahl von Seiten in Abhängigkeit von dem ermittelten Kontext umfassen. Außerdem werden mehrere Interaktionselemente (z.B. drei Interaktionselemente) für die mehreren Seiten ermittelt. Die mehreren Interaktionselemente können dann im kontextabhängigen Bereich ausgegeben werden. Durch die Ausgabe von einer Vielzahl von kontextrelevanten Interaktionselementen kann die kontextabhängige Führung des Nutzers durch das Bedienprogramm weiter verbessert werden. Insbesondere können so relevante Interaktionselemente in unterschiedlichen Themengebieten (z.B. ein Interaktionselement pro Themengebiet) ermittelt und ausgegeben werden.

Das Interaktionselement weist typischerweise eine bildliche Fläche auf. Im Rahmen der Ermittlung eines Interaktionselements können ein oder mehrere Komponente aus der zweiten Seite extrahiert werden (z.B. eine Überschrift und/oder ein Hintergrundbild). Die bildliche Fläche des Interaktionselements kann dann auf Basis der extrahierten ein oder mehreren Komponenten der zweiten Seite ermittelt bzw. erstellt werden. Das Interaktionselement einer Seite des Bedienprogramms kann somit "on the fly" erstellt werden und muss nicht auf einer Speichereinheit des elektronischen Geräts oder auf einem externen Rechner abgespeichert werden. Dadurch kann der erforderliche Speicherplatz für das Bedienprogramm reduziert werden. Außerdem ergibt sich so eine erhöhte Flexibilität in Bezug auf die Darstellung des Interaktionselements (d.h. auf den Inhalt der bildlichen Fläche). Beispielsweise können die ein oder mehreren extrahierten Komponenten von dem ermittelten Kontext abhängen. Mit anderen Worten, der Inhalt der bildlichen Fläche des Interaktionselements kann von dem ermittelten Kontext abhängen. So kann die Relevanz der mit dem Interaktionselement assoziierten zweiten Seite für einen Nutzer eindeutiger hervorgehoben werden.

Wie bereits dargelegt, können die Seiten der Vielzahl von Seiten jeweils einem Themenbereich aus einer Vielzahl von unterschiedlichen Themenbereichen zugeordnet sein. Beispielhafte Themenbereiche sind "Geräte", "Rezepte" und/oder "Services". Den unterschiedlichen Themenbereichen können jeweils eine unterschiedliche Farbkodierungen oder Farben zugeordnet sein. Beispielsweise kann einem ersten Themenbereich (z.B. "Geräte") die Farbe "blau", einem zweiten Themenbereich (z.B. "Rezepte") die Farbe Gelb/Orange, und einem dritten Themenbereich (z.B. "Services") die Farbe Grün zugeordnet sein. Die Seiten des Bedienprogramms können dann gemäß der Farbkodierung bzw. Farbe des Themenbereichs ausgegeben werden, dem eine jeweilige Seite zugeordnet ist. Insbesondere kann die erste Seite der Vielzahl von Seiten gemäß der Farbkodierung des Themenbereichs ausgegeben werden, dem die erste Seite zugeordnet ist. Durch die Verwendung einer Farbkodierung kann die Orientierung innerhalb des Bedienprogramms für einen Nutzer erleichtert werden. Insbesondere wird es einem Nutzer erleichtert, sich zwischen der Vielzahl von Seiten des Bedienprogramms zu bewegen, um die mehreren Hausgeräte zu bedienen.

In analoger Weise kann auch bei den ein oder mehreren ausgegebenen Interaktionselementen eine Farbkodierung verwendet werden, um die Orientierung und die Bedienung für den Nutzer zu erleichtern. Insbesondere kann das für die zweite Seite ermittelte Interaktionselement gemäß der Farbkodierung des Themenbereichs ausgegeben wird, dem die zweite Seite zugeordnet ist. So kann der Nutzer sofort erkennen, aus welchen Themenbereichen kontextrelevante weitere ein oder mehrere Seiten des Bedienprogramms vorgeschlagen werden. Dies kann den Nutzer bei der Auswahl eines nächsten Bedienschritts unterstützen.

Wie bereits oben dargelegt, ist das elektronische Gerät über das Netzwerk mit einer Vielzahl von Hausgeräten verbunden. Die Vielzahl von Seiten des Bedienprogramms umfasst unterschiedliche Seiten für die Bedienung von unterschiedlichen Hausgeräten der Vielzahl von Hausgeräten. Die Auswahl der zweiten Seite kann derart erfolgen, dass die erste Seite und die zweite Seite eingerichtet sind, jeweils unterschiedliche Hausgeräte der Vielzahl von Hausgeräten zu bedienen. Mit anderen Worten, durch die kontextabhängige Ermittlung und Anzeige von Interaktionselementen kann auf relevante Verbindungen zwischen unterschiedlichen Hausgeräten hingewiesen werden. Beispielsweise kann in Abhängigkeit von dem Status einer Waschmaschine auf die Bedienseite eines Trockners hingewiesen werden (z.B. zur Vorbereitung eines anstehenden Trocknerlaufs zum Trocknen von in der Waschmaschine befindlicher Wäsche). So kann in effizienter Weise ein typischer Workflow in einem Haushalt unterstützt werden.

Gemäß einem weiteren Aspekt wird ein elektronisches Gerät (z.B. ein persönliches elektronische Gerät wie ein Smartphone, ein Tablet PC oder ein Computer) beschrieben, das eingerichtet ist, mehrere Hausgeräte zu bedienen. Das elektronische Gerät umfasst eine Kommunikationseinheit (z.B. ein WLAN-Modul), die eingerichtet ist, über ein Netzwerk mit dem Hausgerät zu kommunizieren. Desweiteren umfasst das elektronische Gerät ein Ausgabemittel, das eingerichtet ist, eine bildliche Darstellung auszugeben. Desweiteren umfasst das elektronische Gerät einen Prozessor, der eingerichtet ist, ein Bedienprogramm auszuführen, wobei das Bedienprogramm eine Vielzahl von Seiten umfasst. Ggf. kann das elektronische Gerät auf einen Server zugreifen, um Teile des Bedienprogramms nach Bedarf auf das elektronische Gerät zu laden. Beispielsweise können einzelne Seiten der Vielzahl von Seiten nach Bedarf auf das elektronische Gerät geladen werden. Alternativ oder ergänzend kann das elektronische Gerät eingerichtet sein, eine Software des Bedienprogramms (ggf. vollständig) auf dem Prozessor auszuführen. Wie bereits dargelegt, ist die Vielzahl von Seiten hierarchisch in einer Menüstruktur angeordnet.

Der Prozessor ist eingerichtet, zu veranlassen, dass eine erste Seite der Vielzahl von Seiten als Teil der bildlichen Darstellung ausgegeben wird (z.B. in dem Basisbereich der bildlichen Darstellung). Der Prozessor ist weiter eingerichtet, eine zweite Seite der Vielzahl von Seiten zu bestimmen. Dabei hängt die zweite Seite von einem, auf Basis der ersten Seite ermittelten, Kontext ab. Desweiteren ist der Prozessor eingerichtet, zu veranlassen, dass ein Interaktionselement als Teil der bildlichen Darstellung in einem kontextabhängigen Bereich der bildlichen Darstellung ausgegeben wird. Das Interaktionselement umfasst dabei typischerweise eine Verknüpfung zu der zweiten Seite.

Gemäß einem weiteren Aspekt, welcher jedoch nicht Teil der beanspruchten Erfindung ist, wird ein Software (SW) Programm beschrieben. Das SW Programm kann eingerichtet werden, um auf einem Prozessor (z.B. auf einem Prozessor eines elektronischen Geräts) ausgeführt zu werden, und um dadurch das in diesem Dokument beschriebene Verfahren auszuführen.

Gemäß einem weiteren Aspekt, welcher jedoch nicht Teil der beanspruchten Erfindung ist, wird ein Speichermedium beschrieben. Das Speichermedium kann ein SW Programm umfassen, welches eingerichtet ist, um auf einem Prozessor ausgeführt zu werden, und um dadurch das in diesem Dokument beschriebene Verfahren auszuführen.

Im Weiteren wird die Erfindung anhand von Ausführungsbeispielen näher beschrieben. Dabei zeigen
Figur 1 ein beispielhaftes Netzwerk mit einer Vielzahl von Hausgeräten;
Figur 2 einen beispielhaften Aufbau eines Seiten-basierten Bedienprogramms;
Figur 3 einen beispielhaften Aufbau einer bildlichen Darstellung einer Seite eines Bedienprogramms; und
Figur 4 ein Flussdiagramm eines beispielhaften Verfahrens zur Bedienung eines Hausgeräts.

Wie eingangs dargelegt, befasst sich das vorliegende Dokument mit der effizienten und intuitiven Bedienung von ein oder mehreren vernetzten Hausgeräten.

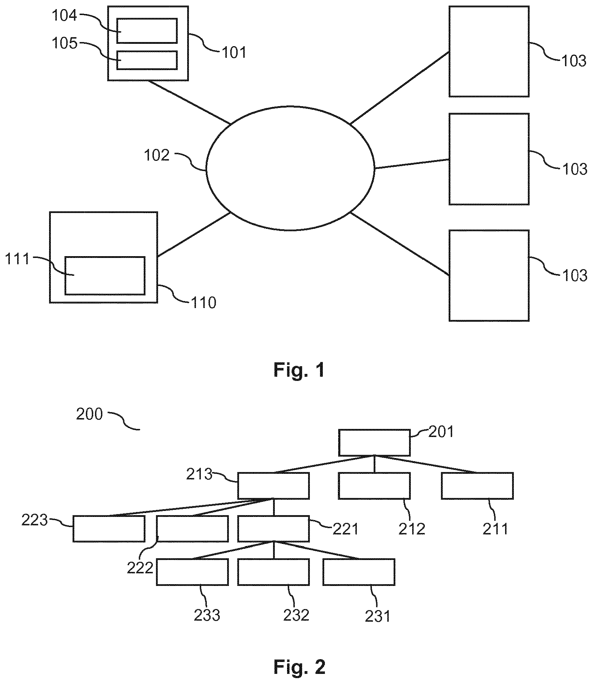

Fig. 1 zeigt eine Vielzahl von Hausgeräten 103 (z.B. ein oder mehrere Öfen, ein oder mehrere Waschmaschinen, ein oder mehrere Trockner, ein oder mehrere Spülmaschinen, etc.) die über ein Netzwerk 102 mit einem elektronischen Gerät 101 verbunden sind. Das Netzwerk 102 kann ein drahtloses und/oder ein drahtgebundenes Netzwerk umfassen.

Beispielhafte drahtlose Netzwerke umfassen ein WLAN, ein UMTS und/oder ein LTE Netzwerk. Das elektronische Gerät 101 kann einen Tablet PC, ein Smartphone oder einen Laptop PC umfassen. Das elektronische Gerät 101 umfasst Ausgabemittel 104 (z.B. einen Bildschirm), die eingerichtet sind, bildliche Informationen auszugeben. Insbesondere können die Ausgabemittel 104 eingerichtet sein, eine bildliche Darstellung einer Seite eines Seiten-basierten Bedienprogramms auszugeben. Desweiteren umfasst das elektronische Gerät 101 Eingabemittel 105 (z.B. eine physikalische Tastatur oder eine virtuelle Tastatur auf einem berührempflindlichen Bildschirm), die eingerichtet sind, eine Eingabe durch einen Benutzer des elektronischen Geräts 101 zu erfassen. Beispielsweise kann ein "Klick" auf ein Eingabeelement auf einer dargestellten Seite eines Bedienprogramms erfasst werden.

Das elektronische Gerät 101 umfasst einen Prozessor, der eingerichtet ist, ein oder mehrere Softwareprogramme und/oder Instruktionen auszuführen. Insbesondere kann das elektronische Gerät eingerichtet sein, anhand eines von dem Prozessor ausgeführten Bedienprogramms die Vielzahl von Hausgeräten 103 über das Netzwerk 102 zu bedienen und/oder Statusinformationen bzgl. der Vielzahl von Hausgeräten 103 über das Netzwerk 102 zu beziehen. Desweiteren kann das elektronische Gerät 101 eingerichtet sein, mittels des Bedienprogramms auf einen externen Rechner (z.B. einen Server) 110 zuzugreifen. Der Rechner 110 kann eine Speichereinheit 111 umfassen, auf der Informationen bzgl. ein oder mehrerer der Vielzahl von Hausgeräten 103 gespeichert sind. Beispielhafte Informationen sind Bedienungsanleitungen, Rezeptsammlungen, Einträge aus Bedienerforen, etc. Außerdem kann über den externen Rechner 110 ggf. auf eine Hotline und/oder auf einen Service bzgl. der Hausgeräte 103 zugegriffen werden.

Somit kann das in Fig. 1 dargestellte elektronische Gerät 101 dazu verwendet werden, ein oder mehrere der Hausgeräte 103 zu steuern und/oder Statusinformationen bzgl. der ein oder mehreren Hausgeräte 103 zu beziehen. Dazu kann das elektronische Gerät 101 ggf. auf den Rechner 110 (z.B. einen Web-Server) zugreifen, um ein Web-basiertes Bedienprogramm auszuführen. Alternativ oder ergänzend kann das Bedienprogramm (z.B. über eine App) zumindest teilweise auf dem elektronischen Gerät 101 bereitgestellt werden. Wie oben dargelegt, kann das Bedienprogramm Seiten-basiert aufgebaut sein. Beispielsweise kann das Bedienprogramm eine Vielzahl von Seiten (z.B. Web-Seiten) umfassen, die in einer vordefinierten Menüstruktur angeordnet sind.

Fig. 2 zeigt einen beispielhaften Aufbau eines Bedienprogramms 200. Das Bedienprogramm 200 umfasst eine Vielzahl von Seiten 201, 211, 212, 213, 221, 222, 223, 231, 232, 233, die in einer Baumstruktur oder Menüstruktur angeordnet sind. Über eine Startseite 201 können durch Auswahl von entsprechenden Menüpunkten auf der Startseite 201 weitere Seiten 211, 212, 213 erreicht werden, usw. Die Startseite 201 kann einem Nutzer der Hausgeräte 103 beispielsweise die Möglichkeit bieten, auf einzelne Hausgeräte 103 zuzugreifen (z.B. über eine Seite 213). Desweiteren können über andere Seiten 212, 211 mit den Hausgeräten 103 assoziierte Aspekte oder Bereiche (z.B. Kochrezepte, Dienstleistungen, Erfahrungsberichte, etc.) angeboten werden. Auf der Seite 213 für den Zugriff auf einzelne Hausgeräte 103 kann dem Nutzer dann beispielsweise die Möglichkeit angeboten werden, über eine Menüauswahl ein spezifisches Hausgerät 103 der Vielzahl von Hausgeräten 103 (z.B. eine Waschmaschine, einen Trockner, eine Spülmaschine, einen Ofen, etc.) auszuwählen. Die einzelnen Hausgeräte 103 können jeweils mit einer der Seiten 221, 222, 223 assoziiert sein. Beispielsweise kann über die Seite 221 auf einen Ofen 103 zugegriffen werden. Auf einer Geräteseite 221 kann dann wiederum über eine Menüauswahl auf spezifische Aspekte des Ofens 103 zugegriffen werden (z.B. anhand der Seiten 231, 232, 233).

Wie das Beispiel in Fig. 2 verdeutlicht, führt der Menüartige Aufbau des Bedienprogramms 200 dazu, dass ein Nutzer, der sich an einer bestimmten Stelle der Menüstruktur befindet (z.B. auf der Seite 233) nur in sehr aufwändiger Weise zu einer anderen Stelle der Menüstruktur gelangen kann (z.B. zu der Seite 211). Es ist dazu erforderlich, dass sich der Nutzer an der vorgegebenen Menüstruktur entlang hangelt, was sehr zeitaufwändig und unkomfortabel ist. Außerdem setzt diese Navigation innerhalb der Menüstruktur voraus, dass der Nutzer weiß, wo sich bestimmte Aspekte / Seiten innerhalb der Menüstruktur befinden.

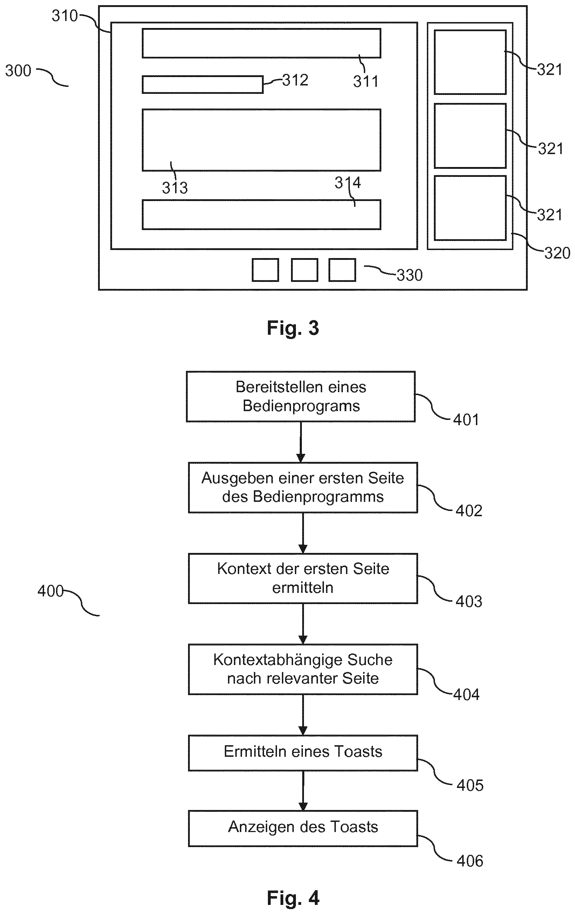

Fig. 3 zeigt einen beispielhaften Aufbau einer erweiterten bildlichen Darstellung 300 einer ersten Seite 233 des Bedienprogramms 200 auf dem Ausgabemittel 104 des elektronischen Geräts 101, durch die es einem Nutzer ermöglicht wird, in effizienter und intuitiver Weise andere Seiten 211 des Bedienprogramms 200 zu erreichen, ohne dabei spezifische Kenntnisse über die Menüstruktur des Bedienprogramms 200 haben zu müssen, und ohne sich dabei durch die gesamte Menüstruktur des Bedienprogramms 200 hangeln zu müssen. Die bildliche Darstellung 300 kann für eine beliebige Seite der Seiten 201, 211, 212, 213, 221, 222, 223, 231, 232, 233 des Bedienprogramms 200 erstellt und ausgegeben werden.

Die in Fig. 3 dargestellte Struktur der bildlichen Darstellung 300 ermöglicht es, dass einem Nutzer für jeden Bedienschritt die passenden ein oder mehreren nächsten Bedienschritte, Funktionen und/oder Dienstleistungen (Services) kontextspezifisch angeboten werden, so dass eine einfache Bedienung einer hohen Zahl von Funktionen und Services ohne aufwändiges Einarbeiten durch den Nutzer ermöglicht wird.

Die beispielhafte bildliche Darstellung 300 umfasst einen Basisbereich 310, in dem eine herkömmliche Seite 231, 232, 233 des Bedienprogramms 200 dargestellt werden kann. Desweiteren kann die Darstellung 300 einen Menübereich 330 umfassen, durch den einzelne übergeordnete Seiten 201, 211, 212, 213 des Bedienprogramms 200 direkt erreicht werden können. Beispielsweise können über den Menübereich 330 die Startseite 201 oder die Seiten 211, 212, 213 der ersten Menüebene des Bedienprogramms 200 erreicht werden. Letztere Seiten 211, 212, 213 können beispielsweise mit den unterschiedlichen Themenbereichen des Bedienprogramms 200 assoziiert sein.

Desweiteren umfasst die bildliche Darstellung 300 einen sogenannten kontextabhängigen Bereich 320 (auch als Toastbereich oder Toastpanel bezeichnet), in dem ein oder mehrere kontextabhängige Interaktionselemente 321 (auch als Toasts bezeichnet) dargestellt werden können. Der Toastbereich 320 kann in Abhängigkeit von der Größe eines Bildschirms 104 des Geräts 101 ständig dargestellt werden, oder ggf. durch eine Wischbewegung auf den Bildschirm 104 geholt werden und wieder von dem Bildschirm 104 "gewischt" werden (insbesondere bei kleineren Bildschirmen 104, wie z.B. bei Smartphones).

Mit anderen Worten, als Ergänzung zu einer Standardnavigation über ein Hauptmenü 211, 212, 213 und über Untermenüs 221, 222, 223, 231, 332, 333 wird eine weitere Klasse von kontextsensitiven Informations- und Interaktionselementen (Toasts) 321 bereitgestellt. Die Toass 321 können Interaktionsmöglichkeiten für Informationen, Funktionen und/oder Services enthalten, die im jeweiligen Nutzungskontext als nächster Bedienschritt in dem Bedienprogramm 200 für den Nutzer relevant sein können. Dabei spielt es keine Rolle, welchem Hauptmenü 211, 212, 213 oder welchen Untermenüs 221, 222, 223, 231, 332, 333 die jeweiligen Informationen, Funktionen oder Services angehören.

Die Toasts 321 können als kachelartige bildliche Bereiche oder Flächen ausgebildet sein, die sich in einem definierten Toastbereich 320 einer bildlichen Darstellung 300 einer jeden Seite 201, 211, 212, 213, 221, 222, 223, 231, 232, 233 des Bedienprogramms 200 befinden.

Die Auswahl der jeweils angezeigten Toasts 321 kann regelbasiert erfolgen. Diesen Regeln kann ein Expertensystem zu Grunde liegen, das die Informationen über den Nutzungskontext der jeweiligen Funktionen und/oder Services (insbesondere der aktuellen Seite 233 des Bedienprogramms 200 im Basisbereich 310) verwendet, um in oder mehrere Toasts 321 auszuwählen.

Das Prinzip der Auswahl der ein oder mehreren Toasts 321 kann an folgenden Beispielen erläutert werden: Dem Nutzer können Reinigungshinweise angezeigt werden, wenn das Hausgerät entsprechend häufig benutzt wurde. Dem Nutzer, der gerade Reinigungshinweise für ein bestimmtes Hausgerät 103 gelesen hat, kann das aktuelle Statusmonitoring weiterer über das Netzwerk 102 verbundener Hausgeräte 103 angeboten werden. Dem Nutzer eines Ofens 103 können passende Rezepte angeboten werden. Wenn ein Rezept ausgewählt wurde, können Informationen über bestimmte Rezeptinhalte angeboten werden und es kann die Möglichkeit angeboten werden, das passende Programm des Ofens 103 für das ausgewählte Rezept direkt zu starten.

Der Nutzer kann über die Auswahl eines Toasts 321 direkt auf eine Seite 211 des Bedienprogramms (innerhalb der Menüstruktur) gelangen, zu dem der Inhalt des Toasts 321 gehört. Insbesondere wird dem Nutzer die zu dem ausgewählten Toast 321 gehörende Seite 211 als Basisseite in einem Basisbereich 310 einer neuen bildlichen Darstellung 300 angezeigt. Desweiteren werden dem Nutzer wiederum in einem Toastbereich 320 der neuen bildlichen Darstellung 300 kontextrelevante Navigationsmöglichkeiten in Form von weiteren Toasts 321 angezeigt. Die Standardinteraktion über die Menüstruktur muss von dem Benutzer somit nur noch für Informationen, Funktionen und/oder Services genutzt werden, die nicht über die Toasts 321 angeboten werden.

Fig. 3 zeigt weiter beispielhafte Elemente einer im Basisbereich 310 dargestellten Seite 233. Wie bereits oben dargelegt, umfasst eine im Basisbereich 310 dargestellte Seite typischerweise eine der Seiten 201, 211, 212, 213, 221, 222, 223, 231, 232, 233 des in Fig. 2 dargestellten Seiten-basierten Bedienprogramms 200. Die im Basisbereich 310 dargestellte Seite 233 kann auch als Basisseite bezeichnet werden. Eine Basisseite 233 kann eine Überschrift 311 umfassen, die in zusammenfassender Weise anzeigt, welche Informationen sich auf der Basisseite 233 befinden und/oder welche Aktionen auf der Basisseite 233 ausgeführt werden können. Desweiteren kann die Basisseite 233 eine Menüliste 312 umfassen, die anzeigt, wie man von der aktuellen Basisseite 233 über die vordefinierte Menüstruktur des Bedienprogramms 200 (siehe Fig. 2) zu anderen Seiten 211 der Menüstruktur navigieren kann. Desweiteren kann die Basisseite 233 einen Informationsbereich oder Textbereich 313 umfassen (z.B. für Status-Informationen bzgl. des Status eines Hausgeräts, oder für Anweisungen eines Rezepts). Außerdem kann die Basisseite 233 Steuerelemente 314 umfassen, die es einem Nutzer ermöglichen, ein oder mehrere Steuerbefehle an ein über die aktuelle Basisseite 233 steuerbares Hausgerät 103 zu senden.

Aus den Informationen einer aktuell angezeigten Basisseite 233 kann ein Kontext ermittelt werden. Mit anderen Worten, die Informationen einer aktuellen angezeigten Basisseite 233 können dazu verwendet werden, einen aktuellen Kontext zu ermitteln. Der Kontext kann z.B. ein oder mehrere der folgenden Komponenten umfassen:
- ein Schlagwort, welches auf der aktuellen angezeigten Basisseite 233 erscheint;
- die Referenznummer einer Fehlermeldung, die auf der aktuellen Basisseite 233 angezeigt wird;
- ein Typ des Hausgeräts 103, mit der die aktuelle Basisseite 233 assoziiert ist; und/oder
- eine Bedienaktion für ein Hausgerät 103, die auf der aktuellen Basisseite ausgeführt werden kann.

Auf Basis des Kontexts können dann ein oder mehrere andere Seiten 211 des Bedienprogramms 200 ermittelt werden, die für den aktuellen Kontext relevant sind. Zu diesem Zweck können beispielsweise vordefinierte Regeln und/oder Suchalgorithmen verwendet werden. Für die ein oder mehreren ermittelten Seiten 211 (auch als Kandidatenseiten bezeichnet) kann jeweils ein Relevanzmaß bestimmt werden, und die ein oder mehreren ermittelten Seiten 211 können in Abhängigkeit von dem Relevanzmaß sortiert werden. Das Relevanzmaß kann anzeigen, wie relevant eine ermittelte Seite 211 für den aktuellen Kontext der aktuellen Basisseite 233 ist. Anhand des Relevanzmaßes kann eine Rangfolge der Vielzahl von ermittelten Seiten 211 (in Bezug auf den Kontext) erstellt werden. Beispielsweise kann so eine begrenzte Zahl von ermittelten Seiten 211 (z.B. drei Seiten) unter Berücksichtigung des Relevanzmaßes ausgewählt werden (z.B. die Seiten 211 mit dem höchsten Relevanzmaß für die aktuelle Basisseite 233).

Für die ausgewählten ein oder mehreren Seiten 211 kann dann jeweils ein Toast 321 erstellt werden. Zu diesem Zweck können nach einem vordefinierten Verfahren ein oder mehrere Komponenten einer ausgewählten Seite 211 (z.B. ein Hintergrundbild und/oder eine Überschrift 311) verwendet werden, um in automatischer Weise ein Toast 321 für eine ausgewählte Seite 211 zu erstellen. Dies hat den Vorteil, dass die Toasts 321 nicht im Vorfeld erstellt, ggf. gepflegt und gespeichert werden müssen.

Die Toasts 321 der ein oder mehreren ausgewählten Seiten 211 werden kann in den Toastbereich 320 der bildlichen Darstellung 300 der aktuellen Basisseite 233 aufgenommen. Somit erhält der Nutzer über die bildliche Darstellung 300 einen schnellen Überblick darüber, welche ein oder mehreren weiteren Seiten 211 des Bedienprogramms 200 in Bezug auf die aktuell dargestellte Basisseite 233 des Bedienprogramms 200 relevant sein könnten. Der Nutzer erhält über die in einem Toast 321 dargestellte zusammenfassende Information einen Überblick darüber, welche Informationen / Aktionen über die mit dem Toast 321 assoziierten Seite 211 des Bedienprogramms 200 zugänglich gemacht werden. Desweiteren kann der Benutzer durch Auswahl eines Toasts 321 (z.B. durch "Anklicken") direkt die mit dem Toast 321 assoziierte Seite 211 des Bedienprogramms 200 aufrufen, ohne dazu die gesamte Menüstruktur des Bedienprogramms 200 (siehe Fig. 2) durchlaufen zu müssen.

Im Folgenden werden beispielhafte Eigenschaften eines Toasts 321 aufgeführt. Wie bereits dargelegt, stellen Toasts 321 kontextbezogene Informationen bzgl. einer anderen Inhaltseite 211 zur Verfügung. Die Toasts 321 bieten einem Nutzer einen nächsten möglichen Bedienschritt im Rahmen des Seiten-basierten Bedienprogramms 200 an. Toasts 321 zeigen typischerweise keine Informationen an, die Teil der geöffneten Inhaltsseite 233 (d.h. der aktuellen Basisseite im Basisbereich 310) sind. Die in einem Toast 321 dargestellten Informationen verweisen auf eine eigene Inhaltsseite 211 des Bedienprogramms 200. Typischerweise werden die dargestellten Inhalte eines Toasts 321 nicht durch eine Einstellung oder eine Auswahl auf der aktuellen Basisseite 233 geändert. Die dargestellten Inhalte eines Toasts 321 können sich aber auf bestimmte Inhalte der aktuellen Basisseite 233 beziehen.

Die einem Toast 321 zugehörige Inhaltsseite 211 ist auch über eine direkte Navigation innerhalb der Menüstruktur des Bedienprogramms 200 erreichbar. Der Toast 321 einer Seite 211 des Bedienprogramms 200 ist statusunabhängig vorhanden. Mit anderen Worten, ein Toast 321 existiert für eine Seite 211, die mit einem Status eines Hausgeräts 103 assoziiert ist, unabhängig vom tatsächlichen Status des Hausgeräts 103.

Ggf. können Toasts 321 eine rudimentäre Bedienung aufweisen, wie z.B. einen Start- oder Stopp-Button. Beispielsweise besteht die Möglichkeit ein Video durch Klick auf eine Vorschau im Toast 321 direkt auszurufen. Typischerweise beinhalten Toasts 321 jedoch keine komplexen Bedienelemente wie z.B. die Kontrolle zur Programmauswahl eines Programms eines Hausgeräts 103. Ein Toast 321 umfasst typischerweise einen Link oder eine Verknüpfung zu der Seite 211, mit der der Toast 321 assoziiert ist. Der Nutzer kann durch Auswahl des Toasts 321 auf die verlinkte Seite 211 gelangen und dort die Bedienung eines Hausgeräts 103 vornehmen.

Ein Toast 321 kann Informationen umfassen, die einem Nutzer einen Überblick über die mit dem Toast 321 assoziierte Seite 211 vermitteln. Beispielsweise kann ein Toast 321 eine Überschrift zur Verdeutlichung der Zugehörigkeit oder als Einleitung in den abgebildeten Inhalt umfassen. Alternativ oder ergänzend kann ein Toast 321 ein Bild, ein Icon oder ein Videobild (mit Startfunktion) umfassen. Desweiteren kann ein Toast 321 ein Button zum Auslösen einer Funktion z.B. eines Ofenprogramms umfassen. Außerdem kann ein Kurztext zur Beschreibung des Inhalts oder als Hinweis für einen Status oder eine Funktion wiedergegeben werden. Die Inhalte und/oder Komponenten des Toasts 321 können aus ein oder mehreren Komponenten der assoziierten Seite 211 (ggf. kontextabhängig) aufgebaut werden.

Wie in Fig. 2 dargestellt, kann das Bedienprogramm 200 in verschiedene Aspekte oder Bereiche unterteilt sein. Jedem Bereich (auch als Themenbereich bezeichnet) kann ein Teil der Menüstruktur des Bedienprogramms 200 zugeordnet sein. Beispielsweise kann jedem Bereich jeweils eine der Seiten 211, 212, 213 und die jeweiligen damit verknüpften, hierarchisch untergeordneten Seiten der Menüstruktur zugeordnet sein. Jeder Bereich des Bedienprogramms 200 kann mit einem bestimmten Thema assoziiert sein. Beispielsweise kann der Bereich mit der Startseite 213 dem Thema "Bedienung eines Hausgeräts" zugeordnet sein. Der Bereich mit der Startseite 212 kann mit dem Thema "Rezepte" assoziiert sein und der Bereich mit der Startseite 211 kann mit dem Thema "Services" (d.h. Dienstleistungen in Bezug auf die Hausgeräte 103) assoziiert sein.

Um die Orientierung eines Nutzers innerhalb des Bedienprogramms 200 zu verbessern, kann eine Bereichsabhängige Farbkodierung der dargestellten Seiten 233 erfolgen. Insbesondere kann jeder Bereich einer bestimmten Farbe zugeordnet werden, und Seiten die zu einem bestimmten Bereich gehören, können mit der Farbe dargestellt werden, die dem Bereich zugeordnet ist. Dadurch wird die Nutzung des Bedienprogramms 200 vereinfacht, da der Nutzer zu jedem Zeitpunkt bereits über die Farbe einer dargestellten Seite erfassen kann, zu welchem thematischen Bereich die dargestellte Seite gehört.

In den unterschiedlichen Bereichen des Bedienprogramms 200 (z.B. des Webseitenbasierten Bedienprogramms) kann somit eine durchgängige Farbkodierung als ein Merkmal des Interaktionskonzeptes eingesetzt werden. Jedem der unterschiedlichen Bereiche kann eine charakteristische Farbe zugeordnet werden, die sich in allen Elementen (insbesondere auf den unterschiedlichen Seiten) des Interaktionskonzeptes wiederfindet. Werden dem Nutzer innerhalb eines farblich gekennzeichneten Bereiches Funktionen oder Services aus einem anderen Bereich zur Nutzung angeboten (z.B. anhand von ein oder mehreren Toasts 321), so können diese Funktionen oder Services mit der Farbkodierung ihres jeweiligen Bereiches versehen werden. Dadurch wird dem Nutzer angezeigt, dass er/sie beim Aktivieren der jeweiligen Funktionen (z.B. bei Auswahl des Toasts 321) den aktuellen Bereich verlässt und in den Bereich mit der zugehörigen Farbe wechselt. Damit ist eine einfache Navigation und Orientierung bei einer hohen Funktionsvielfalt mit Funktionen aus unterschiedlichen Domänen (Bereichen) innerhalb des Bedienprogramms 200 möglich.

Wie oben dargelegt, ist ein Toast 321 mit einer bestimmten Seite 211 des Bedienprogramms 200 assoziiert. Eine bestimmte Seite 211 ist über die Menüstruktur wiederum einem der vorbestimmten Bereiche oder Kategorien zugeordnet, und damit ggf. auch einer bestimmten Farbe zugeordnet. Somit kann auch ein Toast 321 der bestimmten Farbe zugeordnet sein. Zur vereinfachten Wiedererkennung kann der Toast 321 durch die bestimmte Farbe des zugehörigen Bereiches kenntlich gemacht werden (z.B. durch einen Balken in entsprechender Farbe). Somit kann der Nutzer den im Toast 321 angezeigten Inhalt auch auf direktem Weg einfach wiederfinden (da durch die Farbe direkt erkenntlich ist, welchem Bereich die zu dem Toast 321 gehörende Seite 211 zugeordnet ist).

Fig. 4 zeigt ein Flussdiagramm eines beispielhaften Verfahrens 400 zur Bedienung eines Hausgeräts 103 mittels eines elektronischen Geräts 101, das über ein Netzwerk 102 mit dem Hausgerät 103 verbunden ist. Das Verfahren 400 umfasst das Bereitstellen 401 eines Bedienprogramms 200 für das Hausgerät 103. Das Bedienprogramm 200 umfasst typischerweise eine Vielzahl von Seiten 211, 233, die hierarchisch in einer Menüstruktur angeordnet ist. Das Verfahren 400 umfasst weiter das Ausgeben 402 einer ersten Seite 233 der Vielzahl von Seiten 211, 233 anhand eines Ausgabemittels 104 (z.B. anhand eines Bildschirms) des elektronischen Geräts 101. Auf Basis der ausgegebenen ersten Seite 233 wird ein Kontext für die erste Seite 233 ermittelt (Schritt 233). Das Verfahren umfasst weiter das Bestimmen 404 einer zweiten Seite 211 der Vielzahl von Seiten 211, 233 in Abhängigkeit von dem ermittelten Kontext. Außerdem umfasst das Verfahren das Ermitteln 405 eines Toasts 321 (in diesem Dokument auch als Interaktionselement bezeichnet). Der Toast 321 umfasst typischerweise eine Verknüpfung zu der zweiten Seite 211. Der Toast 321 wird dann anhand des Ausgabemittels 104 des elektronischen Geräts 101 in Zusammenhang mit der ausgegebenen ersten Seite 233 ausgegeben (Schritt 406). Insbesondere können die erste Seite 233 und der Toast 321 nebeneinander dargestellt in einer gemeinsamen bildlichen Darstellung durch das Ausgabemittel 104 des elektronischen Geräts 101 ausgegeben werden.

Die erweiterte bildliche Darstellung 300 einer Basisseite 233 des Bedienprogramms 200 in Zusammenhang mit ein oder mehreren Toasts 321 ermöglicht die Abbildung der Verknüpfung von Inhalten aus verschiedenen Bereichen des Bedienprogramms 200. In den Toasts 321 können kontextrelevante Inhalte aus anderen Bereichen des Bedienprogramms 200 dargestellt werden und bieten dem Nutzer mögliche logische nächste Schritte der Benutzung an und/oder führen den Nutzer in einen entsprechenden Bereich des Bedienprogramms 200. Die Navigation durch das Seiten-basierte Bedienprogramm 200 kann somit zielgerichtet von einem Bereich zu einem anderen Bereich durch eine Tabbar im Menübereich 330 erfolgen oder aber durch aufgabenorientiertes Navigieren über die Toasts 321. Mittels der Toasts 321 kann ein "roter Faden" durch das Angebot von sinnvollen nächsten Schritten bereitgestellt werden. Insbesondere kann durch die Toasts 321 der Workflow in einem Haushalt sinnvoll unterstützt werden.

Die Bedienung von vernetzten Hausgeräten 103 und damit in Verbindung stehenden Informationen, Funktionen und/oder Services wird durch das Interaktionspattern der Toasts 321 deutlich erleichtert. Der Nutzer kann häufige Bedienabläufe durch die kontextrelevanten Toasts 321 schnell erreichen, ohne die Struktur der Informations- und Funktionsarchitektur in einem Bedienprogramm 200 (z.B. in einer App) vorher zu erlernen. Durch das integrierte Expertenwissen bezogen auf den Nutzungskontext der Hausgeräte 103 können dem Nutzer Informationen, Funktionen und/oder Services angeboten werden, die das eigene Wissen des Nutzers bzgl. der Nutzung seiner Hausgeräte 103 erweitern. Dadurch ergibt sich eine gesteigerte Bedieneffizienz und ein erhöhter Komfort der Bedienung und der Navigation durch die Informationen, Funktionen und/oder Services des Bedienprogramms 200. Desweiteren wird eine aufgabenbezogene Alternative zu einer Menübasierten Navigation ermöglicht.

Außerdem kann durch die Verwendung einer einheitlichen Farbkodierung die Navigation innerhalb eines Bedienprogramms 200 mit hohem Funktionsumfang erleichtet werden. Dem Nutzer kann insbesondere das Auffinden von Funktionen und Services sowie das Navigieren zwischen Funktionen und Services aus unterschiedlichen Domänen / Bereichen erleichtert werden. Dabei muss sich der Nutzer nicht aktiv über die Zuordnung und Struktur der Funktionen und Services Gedanken machen, sondern erlernt die Navigation zwischen diesen durch die Farbkodierung intuitiv.

Die vorliegende Erfindung ist nicht auf die gezeigten Ausführungsbeispiele beschränkt. Insbesondere ist zu beachten, dass die Beschreibung und die Figuren nur das Prinzip der vorgeschlagenen Verfahren, Vorrichtungen und Systeme veranschaulichen sollen.

### Bezugszeichenliste

- 101: elektronisches Gerät
- 102: (ggf. drahtloses) Netzwerk
- 103: Hausgerät
- 104: Ausgabemittel des elektronischen Geräts 101
- 105: Eingabemittel des elektronischen Geräts 101
- 110: externer Rechner
- 111: Speichereinheit des Rechners 110
- 200: Bedienprogramm
- 201, 211, 212, 213, 221, 222, 223, 231, 232, 233: Seiten des Bedienprogramms 200
- 300: bildliche Darstellung einer Seite des Bedienprogramms 200
- 310: Basisbereich der bildlichen Darstellung 300
- 311: Überschrift einer Seite des Bedienprogramms 200
- 312: Menüleiste einer Seite des Bedienprogramms 200
- 313: Informationsbereich einer Seite des Bedienprogramms 200
- 314: Steuerelemente einer Seite des Bedienprogramms 200
- 320: kontextabhängiger Bereich der bildlichen Darstellung 300
- 321: kontextabhängiges Interaktionselement
- 330: Menübereich der bildlichen Darstellung 300
- 400: Verfahren zur Bedienung eines Hausgeräts 103
- 401, 402, 403, 404, 405, 406: Schritte des Verfahrens 400

## Patentansprüche

1. Verfahren (400) zur Bedienung einer Vielzahl von Hausgeräten (103) mittels eines elektronischen Geräts (101), das über ein Netzwerk (102) mit der Vielzahl von Hausgeräten (103) verbunden ist; wobei das Verfahren (400) umfasst:
- Bereitstellen (401) eines Bedienprogramms (200) für die Hausgeräte (103); wobei das Bedienprogramm (200) eine Vielzahl von Seiten (211, 233) umfasst, die hierarchisch in einer Menüstruktur angeordnet ist und unterschiedliche Seiten für die Bedienung von unterschiedlichen Hausgeräten (103) der Vielzahl von Hausgeräten (103) aufweist;
- Ausgeben (402) einer ersten Seite (233) der Vielzahl von Seiten (211, 233) anhand eines Ausgabemittels (104) des elektronischen Geräts (101), wobei das Ausgabemittel (104) einen Bildschirm umfasst;
- Ermitteln (403) eines Kontextes auf Basis der ausgegebenen ersten Seite (233);
- Bestimmen (404) einer zweiten Seite (211) der Vielzahl von Seiten (211, 233) in Abhängigkeit von dem ermittelten Kontext;
- wobei die erste Seite (233) und die zweite Seite (211) eingerichtet sind, jeweils unterschiedliche Hausgeräte (103) der Vielzahl von Hausgeräten (103) zu bedienen;
- Ermitteln (405) eines Interaktionselements (321), wobei das Interaktionselement eine Verknüpfung zu der zweiten Seite (211) umfasst; und
- Ausgeben (406) des Interaktionselements (321) anhand des Ausgabemittels (104) in Zusammenhang mit der ausgegebenen ersten Seite (233), wobei die erste Seite (233) in einem Basisbereich (310) einer bildlichen Darstellung (300) ausgegeben wird und das Interaktionselement (321) in einem kontextabhängigen Bereich (320) der bildlichen Darstellung (300) ausgegeben wird, wobei der kontextabhängige Bereich (320) einen Bereich umfasst, in dem eine Vielzahl von Interaktionselementen (321) dargestellt werden kann;
**dadurch gekennzeichnet, dass**
- das Ermitteln (403) des Kontextes ein Analysieren von Informationen umfasst, die auf der ersten Seite (233) dargestellt sind, wobei die Informationen ein oder mehrere umfassen von: eine Überschrift (311) der ersten Seite (233), eine Fehlermeldung und/oder Statusmeldung bzgl. des Hausgeräts (103), ein auf der ersten Seite (233) dargestellter Textblock (313), ein oder mehrere dargestellte Bedienelemente (314) zur Steuerung des Hausgeräts (103), und/oder ein Hintergrundbild der ersten Seite (233),
- wobei das Bestimmen (404) der zweiten Seite (211) umfasst: Ermitteln von mehreren Kandidatenseiten aus der Vielzahl von Seiten (211, 233) in Abhängigkeit von dem ermittelten Kontext, Ermitteln einer Relevanz von jeder der mehreren Kandidatenseiten für den ermittelten Kontext, Sortieren der Kandidatenseiten in Abhängigkeit der Relevanz und Auswählen einer begrenzten Zahl von Kandidatenseiten unter Berücksichtigung der Relevanz;
- wobei mehrere Interaktionselemente (321) für die mehreren ausgewählten Kandidatenseiten (211) ermittelt werden und
- die mehreren ermittelten Interaktionselemente (321) im kontextabhängigen Bereich (320) ausgegeben werden.

2. Verfahren (400) gemäß Anspruch 1, wobei
der Basisbereich (310) und der kontextabhängige Bereich (320) für unterschiedliche Seiten (233) der Vielzahl von Seiten (211, 233) örtlich fixiert sind.

3. Verfahren (400) gemäß Anspruch 2, wobei
- der Basisbereich (310) und der kontextabhängige Bereich (320) gleichzeitig in der bildlichen Darstellung (300) ausgegeben werden;
- der Basisbereich (310) und der kontextabhängige Bereich (320) nebeneinander in der bildlichen Darstellung (300) ausgegeben werden; und/oder
- in Reaktion auf eine Eingabe auf dem elektronischen Gerät (101) der kontextabhängige Bereich (320) aus der bildlichen Darstellung (300) entfernt wird.

4. Verfahren (400) gemäß einem vorhergehenden Anspruch, wobei
- das Interaktionselement (321) eine bildliche Fläche umfasst;
- das Ermitteln (405) des Interaktionselements (321) umfasst,
- Extrahieren von ein oder mehreren Komponenten aus der zweiten Seite (211); und
- Erstellen der bildlichen Fläche des Interaktionselements (321) auf Basis der extrahierten ein oder mehreren Komponenten der zweiten Seite (211).

5. Verfahren (400) gemäß Anspruch 4, wobei die ein oder mehreren extrahierten Komponenten von dem ermittelten Kontext abhängen.

6. Verfahren (400) gemäß einem vorhergehenden Anspruch, wobei das Bestimmen (404) der zweiten Seite (211) umfasst,
- Ermitteln von ein oder mehreren Schlagwörtern auf Basis des ermittelten Kontextes; und
- Bestimmen der zweiten Seite (211) anhand der ein oder mehreren Schlagwörter.

7. Verfahren (400) gemäß Anspruch 6, wobei die zweite Seite (211) auch anhand von ein oder mehreren vordefinierten Regeln ermittelt wird.

8. Verfahren (400) gemäß einem vorhergehenden Anspruch, wobei
- die Seiten (211, 233) der Vielzahl von Seiten (211, 233) jeweils einem Themenbereich aus einer Vielzahl von unterschiedlichen Themenbereichen zugeordnet sind;
- den unterschiedlichen Themenbereichen jeweils ein unterschiedliche Farbkodierung zugeordnet ist; und
- die erste Seite (233) der Vielzahl von Seiten (211, 233) gemäß der Farbkodierung des Themenbereichs ausgegeben wird, dem die erste Seite (233) zugeordnet ist.

9. Verfahren (400) gemäß Anspruch 8, wobei das Interaktionselement (321) gemäß der Farbkodierung des Themenbereichs ausgegeben wird, dem die zweite Seite (211) zugeordnet ist.

10. Elektronisches Gerät (101), das eingerichtet ist, eine Vielzahl von Hausgeräten (103) zu bedienen, wobei das elektronische Gerät (101) umfasst,
- eine Kommunikationseinheit, die eingerichtet ist, über ein Netzwerk (102) mit der Vielzahl von Hausgeräten (103) zu kommunizieren;
- ein Ausgabemittel (104), das eingerichtet ist, eine bildliche Darstellung (300) auszugeben, wobei das Ausgabemittel (104) einen Bildschirm umfasst; und
- einen Prozessor, der eingerichtet ist,
- ein Bedienprogramm (200) auszuführen, wobei das Bedienprogramm (200) eine Vielzahl von Seiten (211, 233) umfasst; wobei die Vielzahl von Seiten (211, 233) hierarchisch in einer Menüstruktur angeordnet ist und unterschiedliche Seiten für die Bedienung von unterschiedlichen Hausgeräten (103) der Vielzahl von Hausgeräten (103) aufweist;
- zu veranlassen, dass eine erste Seite (233) der Vielzahl von Seiten (211, 233) als Teil der bildlichen Darstellung (300) ausgegeben wird;
- eine zweite Seite (211) der Vielzahl von Seiten (211, 233) zu bestimmen; wobei die zweite Seite (211) von einem auf Basis der ersten Seite (233) ermittelten Kontext abhängt; und
- zu veranlassen, dass ein Interaktionselement (321) als Teil der bildlichen Darstellung (300) ausgegeben wird; wobei das Interaktionselement (321) eine Verknüpfung zu der zweiten Seite (211) umfasst,
- wobei die erste Seite (233) und die zweite Seite (211) eingerichtet sind, jeweils unterschiedliche Hausgeräte (103) der Vielzahl von Hausgeräten (103) zu bedienen,
- wobei die erste Seite (233) in einem Basisbereich (310) der bildlichen Darstellung (300) ausgegeben wird und das Interaktionselement (321) in einem kontextabhängigen Bereich (320) der bildlichen Darstellung (300) ausgegeben wird, wobei der kontextabhängige Bereich (320) einen Bereich umfasst, in dem eine Vielzahl von Interaktionselementen (321) dargestellt werden kann,
**dadurch gekennzeichnet, dass**
der Prozessor weiterhin dafür eingerichtet ist,
- den Kontext unter Analysieren von Informationen zu ermitteln, die auf der ersten Seite (233) dargestellt sind, wobei die Informationen ein oder mehrere umfassen von: eine Überschrift (311) der ersten Seite (233), eine Fehlermeldung und/oder Statusmeldung bzgl. des Hausgeräts (103), ein auf der ersten Seite (233) dargestellter Textblock (313), ein oder mehrere dargestellte Bedienelemente (314) zur Steuerung des Hausgeräts (103), und/oder ein Hintergrundbild der ersten Seite (233),
- wobei das Bestimmen (404) der zweiten Seite (211) umfasst: Ermitteln von mehreren Kandidatenseiten aus der Vielzahl von Seiten (211, 233) in Abhängigkeit von dem ermittelten Kontext, Ermitteln einer Relevanz von jeder der mehreren Kandidatenseiten für den ermittelten Kontext, Sortieren der Kandidatenseiten in Abhängigkeit der Relevanz und Auswählen einer begrenzten Zahl von Kandidatenseiten unter Berücksichtigung der Relevanz;
- wobei mehrere Interaktionselemente (321) für die mehreren ausgewählten Kandidatenseiten (211) ermittelt werden und
- die mehreren ermittelten Interaktionselemente (321) im kontextabhängigen Bereich (320) ausgegeben werden.

## Claims

1. Method (400) for operating a large number of household appliances (103) by means of an electronic device (101), which is connected to the large number of household appliances (103) via a network (102); wherein the method (400) comprises:
- providing (401) an operating program (200) for the household appliances (103); wherein the operating program (200) comprises a large number of pages (211, 233), which are arranged in a menu structure in a hierarchical manner and have different pages for the operation of different household appliances (103) of the large number of household appliances (103);
- outputting (402) a first page (233) of the large number of pages (211, 233) using an output means (104) of the electronic device (101), wherein the output means (104) comprises a screen;
- ascertaining (403) a context on the basis of the first page (233) output;
- determining (404) a second page (211) of the large number of pages (211, 233) as a function of the ascertained context;
- wherein the first page (233) and the second page (211) are configured to each operate different household appliances (103) of the large number of household appliances (103);
- ascertaining (405) an interaction element (321), wherein the interaction element comprises a link to the second page (211); and
- outputting (406) the interaction element (321) using the output means (104) in conjunction with the first page (233) output, wherein the first page (233) is output in a base region (310) of a visual representation (300) and the interaction element (321) is output in a context-dependent region (320) of the visual representation (300), wherein the context-dependent region (320) comprises a region in which a large number of interaction elements (321) can be represented;
**characterised in that**
- the ascertaining (403) of the context comprises an analysing of information that is represented on the first page (233), wherein the information comprises one or more of the following: a heading (311) of the first page (233), an error message and/or status message relating to the household appliance (103), a text block (313) represented on the first page (233), one or more represented operating elements (314) for controlling the household appliance (103), and/or a background image of the first page (233),
- wherein the determining (404) of the second page (211) comprises: ascertaining a plurality of candidate pages from the large number of pages (211, 233) as a function of the ascertained context, ascertaining a relevance of each of the plurality of candidate pages for the ascertained context, sorting the candidate pages as a function of the relevance and selecting a limited number of candidate pages while taking into consideration the relevance;
- wherein a plurality of interaction elements (321) are ascertained for the plurality of selected candidate pages (211) and
- the plurality of ascertained interaction elements (321) are output in the context-dependent region (320).

2. Method (400) according to claim 1, wherein
the base region (310) and the context-dependent region (320) have fixed positions for different pages (233) of the large number of pages (211, 233).

3. Method (400) according to claim 2, wherein
- the base region (310) and the context-dependent region (320) are output at the same time in the visual representation (300);
- the base region (310) and the context-dependent region (320) are output next to one another in the visual representation (300); and/or
- the context-dependent region (320) is removed from the visual representation (300) as a response to an input on the electronic device (101).

4. Method (400) according to one of the preceding claims, wherein
- the interaction element (321) comprises a visual area;
- the ascertaining (405) of the interaction element (321) comprises
- extracting one or more components from the second page (211); and
- creating the visual area of the interaction element (321) on the basis of the extracted one or more components of the second page (211).

5. Method (400) according to claim 4, wherein the one or more extracted components depend upon the ascertained context.

6. Method (400) according to a preceding claim, wherein the determining (404) of the second page (211) comprises
- ascertaining one or more keywords on the basis of the ascertained context; and
- determining the second page (211) using the one or more keywords.

7. Method (400) according to claim 6, wherein the second page (211) is also ascertained using one or more predefined rules.

8. Method (400) according to a preceding claim, wherein
- the pages (211, 233) of the large number of pages (211, 233) are each assigned to a topic region from a large number of different topic regions;
- a different colour coding is assigned to each of the different topic regions; and
- the first page (233) of the large number of pages (211, 233) is output according to the colour coding of the topic region to which the first page (233) is assigned.

9. Method (400) according to claim 8, wherein the interaction element (321) is output according to the colour coding of the topic region to which the second page (211) is assigned.

10. Electronic device (101), which is configured to operate a large number of household appliances (103), wherein the electronic device (101) comprises
- a communication unit that is configured to communicate with the large number of household appliances (103) via a network (102),
- an output means (104) that is configured to output a visual representation (300), wherein the output means (104) comprises a screen; and
- a processor that is configured
- to run an operating program (200), wherein the operating program (200) comprises a large number of pages (211, 233); wherein the large number of pages (211, 233) are arranged in a menu structure in a hierarchical manner and have different pages for the operation of different household appliances (103) of the large number of household appliances (103);
- to prompt a first page (233) of the large number of pages (211, 233) to be output as part of the visual representation (300);
- to determine a second page (211) of the large number of pages (211, 233); wherein the second page (211) depends upon a context ascertained on the basis of the first page (233); and
- to prompt an interaction element (321) to be output as part of the visual representation (300); wherein the interaction element (321) comprises a link to the second page (211),
- wherein the first page (233) and the second page (211) are configured to each operate different household appliances (103) of the large number of household appliances (103),
- wherein the first page (233) is output in a base region (310) of the visual representation (300) and the interaction element (321) is output in a context-dependent region (320) of the visual representation (300), wherein the context-dependent region (320) comprises a region in which a large number of interaction elements (321) can be represented,
**characterised in that**
the processor is furthermore configured
- to ascertain the context by analysing information that is represented on the first page (233), wherein the information comprises one or more of the following: a heading (311) of the first page (233), an error message and/or status message relating to the household appliance (103), a text block (313) represented on the first page (233), one or more represented operating elements (314) for controlling the household appliance (103), and/or a background image of the first page (233),
- wherein the determining (404) of the second page (211) comprises: ascertaining a plurality of candidate pages from the large number of pages (211, 233) as a function of the ascertained context, ascertaining a relevance of each of the plurality of candidate pages for the ascertained context, sorting the candidate pages as a function of the relevance and selecting a limited number of candidate pages while taking into consideration the relevance;
- wherein a plurality of interaction elements (321) are ascertained for the plurality of selected candidate pages (211) and
- the plurality of ascertained interaction elements (321) are output in the context-dependent region (320).

## Revendications

1. Procédé (400) de commande d'une pluralité d'appareils ménagers (103) au moyen d'un appareil électronique (101) qui est connecté à la pluralité d'appareils ménagers (103) par l'intermédiaire d'un réseau (102), dans lequel le procédé (400) comprend :
- mise à disposition (401) d'un programme de commande (200) pour les appareils ménagers (103) ; dans lequel le programme de commande (200) comprend une pluralité de pages (211, 233) qui est disposée hiérarchiquement dans une structure de menus et présente différentes pages pour la commande de différents appareils ménagers (103) de la pluralité d'appareils ménagers (103) ;
- sortie (402) d'une première page (233) de la pluralité de pages (211, 233) à l'aide d'un moyen de sortie (104) de l'appareil électronique (101), dans lequel le moyen de sortie (104) comprend un écran ;
- détermination (403) d'un contexte sur la base de la première page sortie (233) ;
- détermination (404) d'une deuxième page (211) de la pluralité de pages (211, 233) en fonction du contexte déterminé ;
- dans lequel la première page (233) et la deuxième page (211) sont configurées pour respectivement commander différents appareils ménagers (103) de la pluralité d'appareils ménagers (103) ;
- détermination (405) d'un élément d'interaction (321), dans lequel l'élément d'interaction comprend un lien vers la deuxième page (211) ; et
- sortie (406) de l'élément d'interaction (321) à l'aide du moyen de sortie (104) en relation avec la première page sortie (233), dans lequel la première page (233) est sortie dans une zone de base (310) d'une représentation graphique (300) et l'élément d'interaction (321) est sorti dans une zone (320), dépendant du contexte, de la représentation graphique (300), dans lequel la zone (320) dépendant du contexte comprend une zone dans laquelle une pluralité d'éléments d'interaction (321) peut être représentée ;
**caractérisé en ce que**
- la détermination (403) du contexte comprend une analyse d'informations qui sont représentées sur la première page (233), dans lequel les informations comprennent un ou plusieurs de : un titre (311) de la première page (233), un message d'erreur et/ou un message d'état concernant l'appareil ménager (103), un bloc de texte (313) représenté sur la première page (233), un ou plusieurs éléments de commande (314) représentés pour la commande de l'appareil ménager (103), et/ou une image de fond de la première page (233),
- dans lequel la détermination (404) de la deuxième page (211) comprend : détermination de plusieurs pages de candidats provenant de la pluralité de pages (211, 233) en fonction du contexte déterminé, détermination d'une pertinence de chacune des plusieurs pages de candidats pour le contexte déterminé, classement des pages de candidats en fonction de la pertinence, et sélection d'un nombre limité de pages de candidats en tenant compte de la pertinence ;
- dans lequel plusieurs éléments d'interaction (321) sont déterminés pour les plusieurs pages de candidats (211) sélectionnées, et dans lequel
- les plusieurs éléments d'interaction (321) déterminés sont sortis dans la zone (320) dépendant du contexte.

2. Procédé (400) selon la revendication 1, dans lequel
la zone de base (310) et la zone (320) dépendant du contexte (320) sont localement fixées pour différentes pages (233) de la pluralité de pages (211, 233).

3. Procédé (400) selon la revendication 2, dans lequel
- la zone de base (310) et la zone (320) dépendant du contexte sont simultanément sorties dans la représentation graphique (300) ;
- la zone de base (310) et la zone (320) dépendant du contexte sont sorties l'une à côté de l'autre dans la représentation graphique (300) ; et/ou
- en réaction à une entrée sur l'appareil électronique (101), la zone (320) dépendant du contexte est supprimée de la représentation graphique (300).

4. Procédé (400) selon l'une quelconque des revendications précédentes, dans lequel
- l'élément d'interaction (321) comprend une surface graphique ;
- la détermination (405) de l'élément d'interaction (321) comprend :
- l'extraction d'un ou de plusieurs composants provenant de la deuxième page (211) ; et
- la création de la surface graphique de l'élément d'interaction (321) sur la base du ou des plusieurs composants extraits de la deuxième page (211).

5. Procédé (400) selon la revendication 4, dans lequel l'un ou les plusieurs composants extraits dépendent du contexte déterminé.

6. Procédé (400) selon l'une quelconque des revendications précédentes, dans lequel la détermination (404) de la deuxième page (211) comprend :
- la détermination d'un ou de plusieurs mots-clés sur la base du contexte déterminé ; et
- la détermination de la deuxième page (211) à l'aide de l'un ou de plusieurs mots-clés.

7. Procédé (400) selon la revendication 6, dans lequel la deuxième page (211) est également déterminée à l'aide d'une ou de plusieurs règles prédéfinies.

8. Procédé (400) selon l'une quelconque des revendications précédentes, dans lequel
- les pages (211, 233) de la pluralité de pages (211, 233) sont respectivement attribuées à un domaine thématique provenant d'une pluralité de différents domaines thématiques ;
- un codage couleur différent est respectivement attribué aux différents domaines thématiques ; et
- la première page (233) de la pluralité de pages (211, 233) est sortie conformément au codage couleur du domaine thématique auquel la première page (233) est attribuée.

9. Procédé (400) selon la revendication 8, dans lequel l'élément d'interaction (321) est sorti conformément au codage couleur du domaine thématique auquel la deuxième page (211) est attribuée.

10. Appareil électronique (101) qui est configuré pour commander une pluralité d'appareils ménagers (103), dans lequel l'appareil électronique (101) comprend :
- une unité de communication qui est configurée pour communiquer avec la pluralité d'appareils ménagers (103) par l'intermédiaire d'un réseau (102) ;
- un moyen de sortie (104) qui est configuré pour sortir une représentation graphique (300), dans lequel le moyen de sortie (104) comprend un écran ; et
- un processeur qui est configuré
- pour exécuter un programme de commande (200), dans lequel le programme de commande (200) comprend une pluralité de pages (211, 233), dans lequel la pluralité de pages (211, 233) est hiérarchiquement disposée dans une structure de menus et présente différentes pages pour la commande de différents appareils ménagers (103) de la pluralité d'appareils ménagers (103) ;
- pour inciter qu'une première page (233) de la pluralité de pages (211, 233) soit sortie en tant que partie de la représentation graphique (300) ;
- pour déterminer une deuxième page (211) de la pluralité de pages (211, 233) ; dans lequel la deuxième page (211) dépend d'un contexte déterminé sur la base de la première page (233) ; et
- pour inciter qu'un élément d'interaction (321) soit sorti en tant que partie de la représentation graphique (300) ; dans lequel l'élément d'interaction (321) comprend un lien vers la deuxième page (211),
- dans lequel la première page (233) et la deuxième page (211) sont configurées pour respectivement commander différents appareils ménagers (103) de la pluralité d'appareils ménagers (103),
- dans lequel la première page (233) est sortie dans une zone de base (310) de la représentation graphique (300) et l'élément d'interaction (321) est sorti dans une zone (320), dépendant du contexte, de la représentation graphique (300), dans lequel la zone (320) dépendant du contexte comprend une zone dans laquelle une pluralité d'éléments d'interaction (321) peut être représentée,
**caractérisé en ce que**
le processeur est en outre configuré
- pour déterminer le contexte par analyse d'informations qui sont représentées sur la première page (233), dans lequel les informations comprennent un ou plusieurs de : un titre (311) de la première page (233), un message d'erreur et/ou un message d'état concernant l'appareil ménager (103), un bloc de texte (313) représenté sur la première page (233), un ou plusieurs éléments de commande (314) représentés pour la commande de l'appareil ménager (103), et/ou une image de fond de la première page (233),
- dans lequel la détermination (404) de la deuxième page (211) comprend : détermination de plusieurs pages de candidats provenant de la pluralité de pages (211, 233) en fonction du contexte déterminé, détermination d'une pertinence de chacune des plusieurs pages de candidats pour le contexte déterminé, classement des pages de candidats en fonction de la pertinence, et sélection d'un nombre limité de pages de candidats en tenant compte de la pertinence ;
- dans lequel plusieurs éléments d'interaction (321) sont déterminés pour les plusieurs pages de candidats (211) sélectionnées, et
- les plusieurs éléments d'interaction (321) déterminés sont sortis dans la zone (320) dépendant du contexte.
